# EUROPEAN PATENT SPECIFICATION

(11) **EP 3 875 235 B1**
(45) Date of publication and mention of the grant of the patent: **01.11.2023**
(21) Application number: 21160231.3
(22) Date of filing: 02.03.2021
(51) Int. Cl.: B28B 11/00, B28B 11/04, B05C 19/04, G01F 13/00, B05C 19/06, B05B 7/14

(54) **DECORATIVE POWDER DISPENSER FOR THE DECORATION OF CERAMIC ARTICLES**
DEKORATIONSPULVERSPENDER FÜR DIE DEKORATION VON KERAMIKARTIKELN
DISTRIBUTEUR DE POUDRE DÉCORATIVE POUR LA DÉCORATION D'ARTICLES EN CÉRAMIQUE

(30) Priority: 02.03.2020 IT 202000004294
(43) Date of publication of application: 08.09.2021
(73) Proprietor: FIMEC 2 S.R.L., 41049 Sassuolo (MO) (IT)
(72) Inventor: Serpagli, Paolo, 41124 Modena (MO) (IT)
(74) Representative: Brunacci, Marco

(56) References cited:
- EP-A1- 2 058 099
- EP-A2- 0 152 539
- WO-A1-2020/006166
- FR-A- 593 382
- US-A- 4 071 170
- US-A- 5 785 761

## Description

### Technical Field

The present invention relates to a decorative powder dispenser for the decoration of ceramic articles.

### Background Art

It is well known that in many sectors of industrial activity there is a particular need to renew the articles in order to distinguish them from those of the competition.

This need is felt, in particular, in the ceramic industry that deals with the production and decoration of ceramic articles, such as e.g. tiles.

The decoration processes of known type involve the use of decorative powders deposited on the decoration surface of the ceramic articles by means of special dispensers.

More specifically, the decorative powders are mixtures of powder and granulate, with a particle size ranging from a few microns to 0.5 millimeters, composed of pigments, ceramic material, glazes or other materials adapted to give a particular aesthetic effect to the ceramic article.

The dispensers of known type usually comprise a decorative powder container, of the type of a hopper, provided with a dispensing port through which the decorative powder flows out and is deposited onto the decoration surface.

Such dispensers do, however, have some drawbacks.

It is not always possible to make accurate decorations using the dispensers of known type, since they do not allow for fine and precise dispensing of the decorative powder.

Furthermore, not to be underestimated is the fact that the decorative powders are, by their nature, highly hygroscopic and tend to form large aggregates which can clog the dispensing port and prevent the outflow of the decorative powder itself.

In addition, the accidental deposition of such aggregates on the decorative surface of the ceramic article may produce alterations in the desired aesthetic effect.

These factors, therefore, can generate even significant aesthetic defects in the final decoration, compromising the entire process, with a consequent increase in the relevant costs.

Other decorative powder dispensers for the decoration of ceramic articles are known from EP 0 152 539 A2, which discloses a dispenser according to the preamble of claim 1, EP 2 058 099 A1, WO 2020/006166 A, US 4 071 170 A.

### Description of the Invention

The main aim of the present invention is to devise a decorative powder dispenser for the decoration of ceramic articles which enables fine and precise dispensing of the decorative powder itself.

Another object of the present invention is to devise a decorative powder dispenser for the decoration of ceramic articles which reduces the risk of bulky aggregate formation.

Another object of the present invention is to devise a decorative powder dispenser for the decoration of ceramic articles which can overcome the aforementioned drawbacks of the prior art within the scope of a simple, rational, easy and effective to use as well as cost-effective solution.

The objects set out above are achieved by the present decorative powder dispenser for the decoration of ceramic articles having the characteristics of claim 1.

### Brief Description of the Drawings

Other characteristics and advantages of the present invention will become more evident from the description of a preferred, but not exclusive, embodiment of a decorative powder dispenser for the decoration of ceramic articles, illustrated by way of an indicative, yet non-limiting example, in the accompanying tables of drawings wherein:
Figure 1 is a schematic view of the decorative powder dispenser according to the invention;
Figure 2 is a schematic side sectional view of the dispenser according to a first embodiment not forming part of the invention, in a configuration of use;
Figures 3 and 4 are schematic side sectional views of the dispenser in Figure 2, in two different configurations of use.
Figures 5 and 6 are schematic side sectional views of the dispenser according to the invention, according to a second embodiment, in two different configurations of use;
Figure 7 is a schematic representation of a machine for the decoration of ceramic articles provided with a plurality of dispensers according to the invention.

### Embodiments of the Invention

With particular reference to these figures, reference numeral 1 globally indicates a decorative powder dispenser for the decoration of ceramic articles.

The dispenser 1 according to the invention comprises at least one containment chamber 2 of a decorative powder A for the decoration of at least one ceramic article M.

For the purposes of the present disclosure, "decorative powder" means a mixture of powders and granulates, with a particle size ranging from a few microns to 0.5 millimeters, composed of pigments, ceramic material, glazes or other materials adapted to give a particular aesthetic effect to the ceramic article M.

In an embodiment of the present invention, the dispenser 1 is movable with respect to the ceramic article M according to a predefined trajectory in order to dispense the decorative powder A according to a predetermined pattern. Alternatively, the ceramic article M is moved with respect to the dispenser 1. The aforementioned containment chamber 2 is of the type of a hopper and is provided with at least one dispensing port 2a through which the decorative powder A is dispensed on a decorative surface S of the ceramic article M.

In more detail, the dispensing port defines a transit hole 12 that allows the decorative powder A to flow out of the containment chamber 2.

The dispenser 1 is also provided with filling means 3 adapted to load the decorative powder A into the containment chamber 2; the filling means 3 are of known type and will not be described in detail in the present discussion.

The dispenser 1 further comprises, at least one plug body 4 provided with at least one closing portion 5 of the dispensing port 2a.

The plug body 4 is movable between a home configuration, wherein the closing portion 5 obstructs the dispensing port 2a and prevents the decorative powder A from being dispensed, and at least one operating configuration, wherein the closing portion 5 is moved away from the dispensing port 2a along at least one direction of movement D1, D2 and allows the decorative powder A to be dispensed.

More specifically, in the home configuration, the closing portion 5 is arranged through the dispensing port 2a.

The movement of the plug body 4 towards the operating configuration allows, therefore, releasing at least partly the dispensing port 2a to allow the outflow of the decorative powder A.

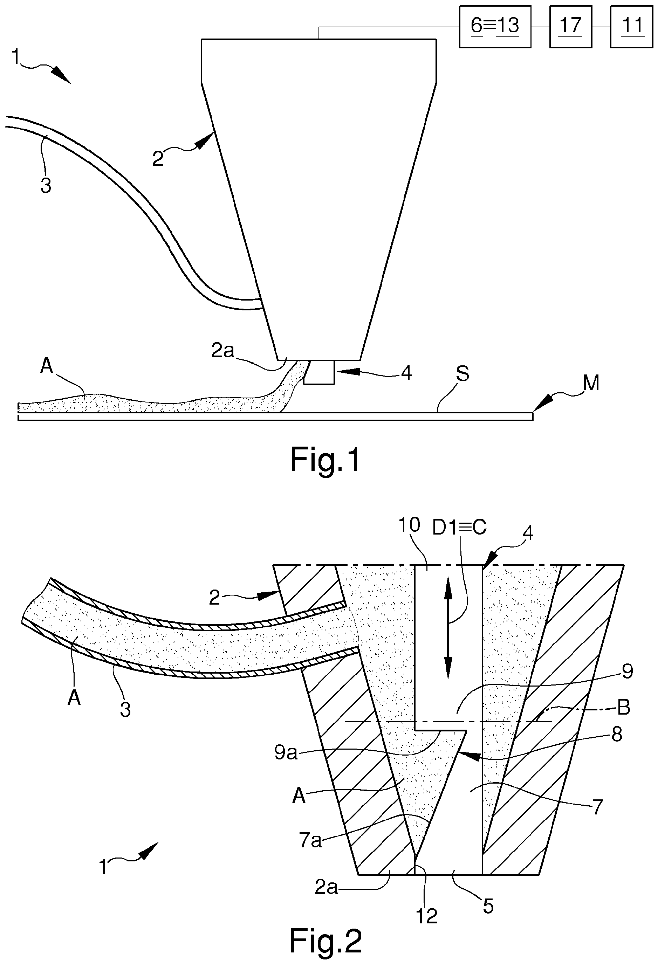

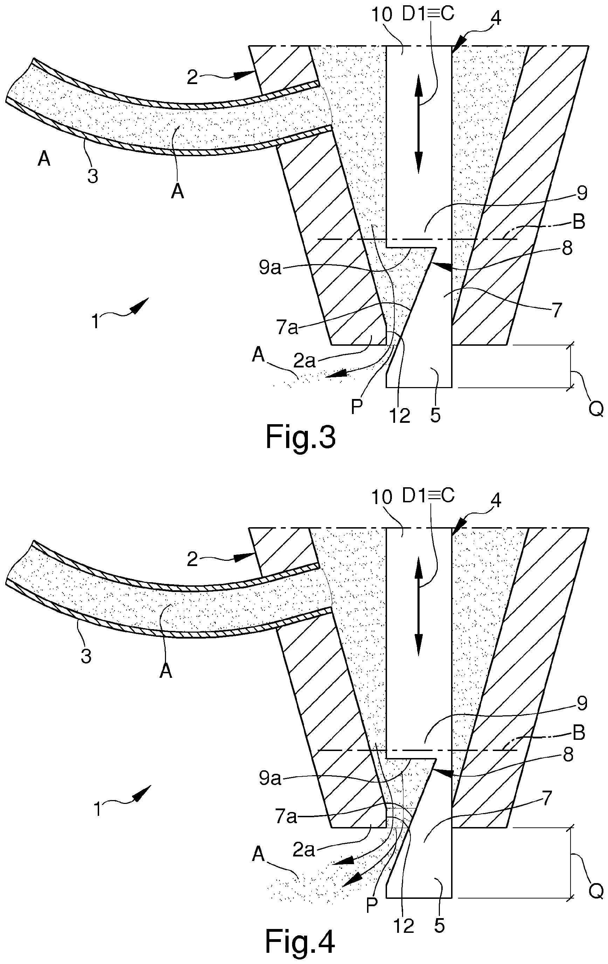

According to a first embodiment shown in Figures 1 to 4 not forming part of the invention, the closing portion 5 is complementary in shape with respect to the dispensing port 2a. Specifically, the walls of the closing portion 5 are in contact with the walls of the transit hole 12 and completely close off the dispensing port 2a.

In other words, the closing portion 5 operates as a plug for the transit hole 12 and fits into the dispensing port 2a to stop the outflow of decorative powder A from the containment chamber 2.

In the movement between the operating configuration and the home configuration, the walls of the closing portion 5 slide on the walls of the transit hole 12.

In the operating configuration, the closing portion 5 is moved away from the dispensing port 2a.

More specifically, the closing portion 5 is arranged outside the containment chamber 2.

Further embodiments cannot however be ruled out wherein, in the operating configuration, the closing portion 5 is arranged inside the containment chamber 2.

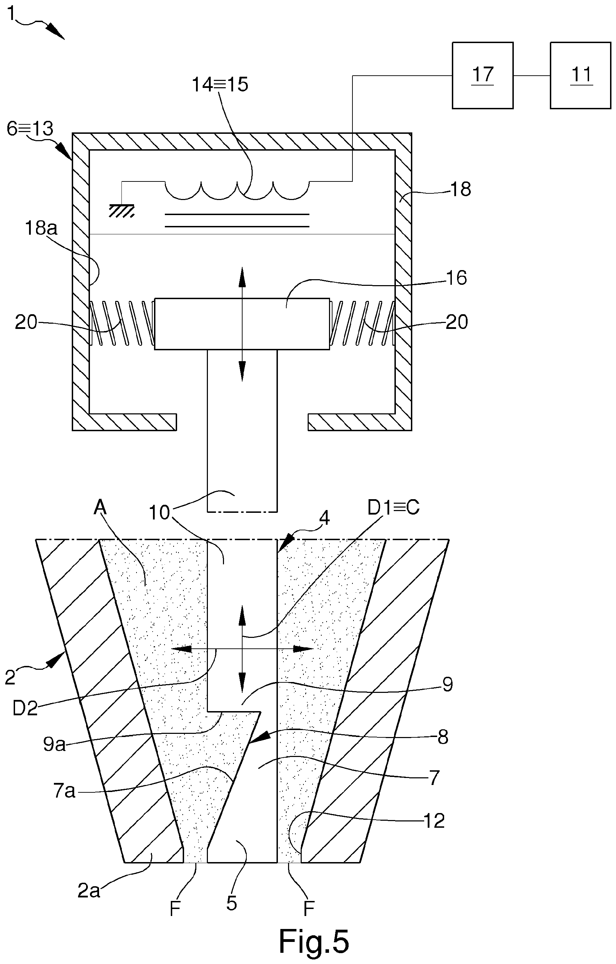

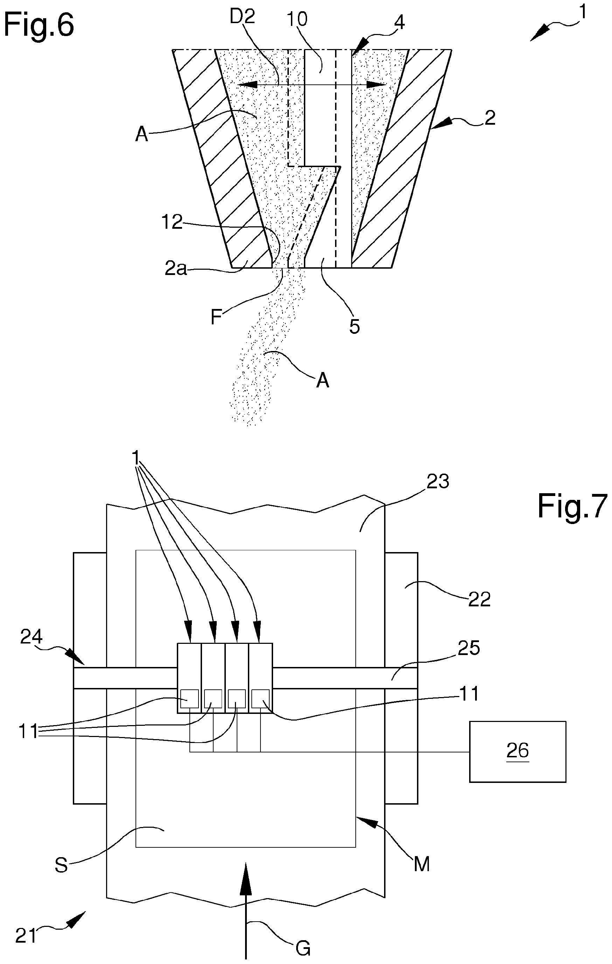

According to a second embodiment shown in Figures 5 and 6 representing the invention, in the home configuration, the closing portion 5 and the dispensing port 2a define a free section F.

In the context of the present disclosure, the expression "free section" means a portion of the transit hole 12 positioned between the closing portion 5 and the dispensing port 2a. In the home configuration, therefore, the transit hole 12 is only partly occupied by the closing portion 5.

Specifically, the walls of the closing portion 5 are arranged at a predetermined distance from the walls of the dispensing port 2a. In this regard, it should be specified that, as explained above, the decorative powder A has a very fine particle size and, therefore, has very small flowability. The dispensing port 2a and the closing portion 5 are, therefore, specially shaped so that the decorative powder A cannot flow through the free section F and come out of the containment chamber 2 in the home configuration.

The dispenser 1 is provided with movement means 6, 13 of the plug body 4 adapted to move the plug body 4 between the home configuration and the operating configuration.

The movement means 6, 13 are adapted to move the plug body 4 sliding along at least one longitudinal direction D1.

The longitudinal direction D1 is substantially parallel to a longitudinal axis of the containment chamber 2 and passes through the dispensing port 2a.

The movement means 6, 13 are further adapted to move the plug body 4 of oscillatory motion along at least one transverse direction D2.

The transverse direction D2 is transverse to the longitudinal axis of the containment chamber 2.

With reference to the second embodiment, the closing portion 5 is also movable between the operating configuration and the home configuration inside the transit hole 12.

The oscillatory movement of the plug body 4 between the home and the operating configurations results in a change in the relative extension of the free section F, thus allowing the decorative powder A to flow out.

As schematically shown in Figure 6, in fact, in the operating configuration, the closing portion 5 is placed in contact with the dispensing port 2a on one side, thus causing an increase in the relative extension of the free section F on the opposite side.

In other words, according to the second embodiment, the plug body 4 may also be moved only by oscillatory motion along the transverse direction D2 to allow the dispensing of the decorative powder A.

The movement means 6, 13 will be described in more detail later in this disclosure.

Advantageously, the plug body 4 comprises at least one dosing portion 7 adapted to adjust the dispensing of the decorative powder A.

In the operating configuration, the dosing portion 7 is arranged through the dispensing port 2a to partly release the dispensing port itself.

In the embodiment shown in the figures, in the home configuration the dosing portion 7 is arranged inside the containment chamber 2.

Further embodiments cannot be ruled out wherein, in the home configuration, the dosing portion 7 is arranged outside the containment chamber 2.

In more detail, the dosing portion 7 allows for a gradual outflow of the decorative powder A from the containment chamber 2, so that precise and accurate decorations can be made.

Conveniently, the dosing portion 7 comprises at least one recess 8 provided with an adjustment surface 7a defining with the dispensing port 2a at least one transit section P of the decorative powder A, in the operating configuration.

The term "transit section" means a portion of the transit hole 12 defined by the dispensing port 2a, which, in the operating configuration, is only partly occupied by the dosing portion 7.

It is easy to appreciate that the dimensions of the recess 8 cause the extent of the transit section P and, therefore, the amount of the decorative powder A which can be dispensed in the operating configuration.

In the home configuration, the extent of the transit section P is zero. Advantageously, the adjustment surface 7a is inclined with respect to the longitudinal direction D1.

The inclination of the adjustment surface 7a causes the extension of the transit section P and the amount of decorative powder A which can be dispensed in the operating configuration.

In the operating configuration, the adjustment surface 7a can be positioned at at least one dispensing height Q along the longitudinal direction D1, defining with the dispensing port 2a a corresponding transit section P.

The expression "dispensing height" means the position reached by the dosing portion 7 with respect to the dispensing port 2a, during the movement of the plug body 4.

Conveniently, the adjustment surface 7a can be positioned at a plurality of dispensing heights Q arranged along the longitudinal direction D1, defining with the dispensing port 2a a plurality of corresponding transit sections P separate from each other.

Depending on the amount of decorative powder A to be dispensed, the plug body 4 is then moved so as to position the dosing portion 7 at a predefined dispensing height Q.

It cannot however be ruled out that the adjustment surface 7a is parallel to the longitudinal direction D1; in that case, the extension of the transit section P remains constant for each dispensing height Q.

The plug body 4 also comprises at least one stirring portion 9 extending at least partly along an axis of mixture B substantially transverse to the longitudinal direction D1 and adapted to mix the decorative powder A during the movement of the plug body 4.

In more detail, the interaction of the stirring portion 9 with the decorative powder A leads to the mix of the decorative powder itself and to the dissociation of any aggregates.

The stirring portion 9 also has the function of promoting the outflow of the decorative powder A through the transit section P, thus generating a compressive force on the decorative powder itself which is directed towards the transit section P.

Specifically, in the embodiment shown in the figures, the stirring portion 9 is defined by the recess 8, which defines a stop surface 9a substantially parallel to the axis of mixture B.

The plug body 4 comprises a rod element 10, extending along a direction of extension C substantially parallel to the longitudinal direction D1.

In more detail, the direction of extension C coincides with the longitudinal direction D1.

The rod element 10 is housed at least partly inside the containment chamber 2. In the embodiment shown in the figures, the closing portion 5 and the dosing portion 7 are associated with the rod element 10 and are arranged adjacent to each other along the direction of extension C.

Conveniently, the stirring portion 9 is associated with the rod element 10 in the proximity of the dosing portion 7.

As disclosed above, the dispenser 1 comprises movement means 6, 13 of the plug body 4 between the home configuration and the operating configuration.

Advantageously, the movement means 6, 13 comprise at least one movement assembly 6 adapted to move the plug body 4 sliding through the dispensing port 2a along the longitudinal direction D1, between the home configuration and the operating configuration.

According to the invention, the movement means 6, 13 comprise a vibration transmission assembly 13 adapted to move by oscillatory motion the plug body 4 along at least one transverse direction D2 between the operating configuration and the home configuration.

It is easy to appreciate that the vibration transmission assembly 13 is adapted to move the plug body 4 along a plurality of transverse directions D2 to induce the oscillatory motion.

Conveniently, the movement means 6, 13 comprise electromagnetic actuator means 14, 15.

To this end, the plug body 4 comprises at least one magnetic element 16 adapted to operate in conjunction with the electromagnetic actuator means 14, 15.

In more detail, the magnetic element 16 is of the type of a magnet or a ferromagnetic body.

The magnetic element 16 is associated with the rod element 10 on the opposite side with respect to the closing portion 5.

Conveniently, the movement means 6, 13 comprise power supply means 17 adapted to supply the electromagnetic actuator means 14, 15 with at least one supply voltage having a predefined frequency to actuate at least one of either the movement assembly 6 or the vibration transmission assembly 13.

The electromagnetic actuator means 14, 15, by means of the supply of the power supply voltage, generate a magnetic field adapted to attract or repel the magnetic element 16 and in so doing they move the plug body 4.

The electromagnetic actuator means 14, 15 comprise at least one actuator device 14 operatively connected to the movement assembly 6.

The actuator device 14 comprises at least one solenoid device.

The electromagnetic actuator means 14, 15 comprise at least one actuator body 15 operatively connected to the vibration transmission assembly 13.

The actuator body 15 comprises at least one solenoid device.

Specifically, the power supply means 17 provide power supply voltage to at least one of either the actuator device 14 or the actuator body 15.

According to a possible embodiment of the present invention, the movement means 6, 13 may comprise a piezoelectric transducer.

The movement assembly 6 comprises at least one actuator device 14 operable to move the plug body 4 along the longitudinal direction D1 between the home configuration and the operating configuration.

More specifically, the actuator device 14 may generate a first magnetic field adapted to repel the magnetic element 16 and thereby to push the plug body 4 to the home configuration and a second magnetic field adapted to attract the magnetic element 16 and to return the plug body 4 to the home configuration. The movement assembly 6 generates an oscillatory longitudinal sliding movement of the plug body 4 between the home configuration and the operating configuration, so as to alternately position the closing portion 5 and the dosing portion 7 at the dispensing port 2a, respectively.

Advantageously, such oscillatory sliding movement depends on the predefined frequency.

This way it is possible to dispense the decorative powder A discontinuously and allow accurate and regular decoration of the ceramic article M.

The speed of movement of the plug body 4 determines the amount of decorative powder A that can be dispensed in the operating configuration.

In addition, the alternating movement between the home and operating configurations allows minimizing the exposure of the decorative powder A to the external environment and, consequently, to temperature and moisture conditions that could promote the formation of the aforementioned aggregates.

The vibration transmission assembly 13 comprises:
- at least one guidance body 18 defining a housing cavity 18a of the magnetic element 16;
- at least one actuator body 15 operable to move the plug body 4 along the transverse direction D2 in the operating configuration; and
- elastically deformable means 20 positioned between the guidance body 18 and the plug body 4 and adapted to return the plug body 4 to the home configuration.

The function of the guidance body 18 is to support the plug body 4 while giving it partial freedom of movement.

The actuator body 15 is adapted to bring the plug body 4 into the operating configuration wherein the relative extension of the free section F is increased compared to the home configuration and allows the dispensing of the decorative powder A.

The elastically deformable means 20 counteract the movement given by the actuator body 15 and tend to return it to the home configuration.

In the embodiment shown in Figure 5, the elastically deformable means 20 comprise one or more springs, which have a relevant end associated with the guidance body 18, inside the housing cavity 18a and an opposite end associated with the magnetic element 16.

In a possible alternative embodiment, not shown in detail in the figures, the elastically deformable means 20 comprise at least one beam of foils, also called a leaf spring, associated with the magnetic element 16 and positioned between the walls of the housing cavity 18a.

As a result of the movement in the operating configuration, the elastically deformable means 20 accumulate the elastic force, which is released after that the actuator body 15 has been deactivated.

The elastic force is released according to an oscillatory motion until it dissipates.

Thus, the vibration transmission assembly 13 generates a movement of oscillatory motion of the plug body 4 between the home configuration and the operating configuration.

Advantageously, such oscillatory motion depends on the predefined frequency. In the embodiment shown in the figures, the actuator body 15 coincides with the actuator device 14.

It cannot however be ruled out that the actuator body 15 and the actuator device 14 are separate from each other.

The dispenser 1 is also provided with adjustment means 11 operatively connected to the movement means 6, 13 and configured to adjust at least one of either the dispensing height Q, in the operating configuration, the speed of movement of the plug body 4, between the home configuration and the operating configuration, or the predefined frequency.

Substantially, the adjustment means 11 allow setting a predefined dispensing height Q at which the dosing portion 7 is to be positioned in the operating configuration in order to define a given transit section P.

The adjustment means 11 also allow setting a predefined oscillation speed, so as to adjust the amount of decorative powder A dispensable through the dispensing port 2a.

Finally, the adjustment means 11 allow setting a predefined frequency of the power supply voltage, so as to induce a certain movement to the plug body 4. The adjustment means 11 are of the type of an electronic control device, such as e.g. a microcontroller, a PLC, a PCB or the like.

The operation of the dispenser 1 according to the invention is as follows. Initially, the plug body 4 is in the home configuration and the decorative powder A is loaded inside the containment chamber 2 by means of the filling means 3.

Then, by means of the adjustment means 11, the dispensing height Q is set, for the determination of a well-defined transit section P, and/or the oscillation speed of the plug body 4 between the home and the operating configurations, in order to adjust the amount of decorative powder A dispensable through the dispensing port 2a and/or the frequency of the power supply voltage in order to induce a certain movement to the plug body 4.

The movement means 6, 13 are then actuated to move the plug body 4 and to dispense the decorative powder A on the decorative surface S of the ceramic article M, enabling the decoration of the ceramic article itself.

According to a further aspect, the present invention also relates to a machine 21 for the decoration of ceramic articles, shown schematically in Figure 7.

The machine 21 comprises at least one basic frame 22 and at least one dispenser 1 according to the invention.

The dispenser 1 is associated movable in a sliding manner with the basic frame 22 along at least one axis of work W.

The machine 21 also comprises a work surface 23 adapted to support the ceramic article M with the decorative surface S facing upwards.

In the embodiment shown in the figures, the work surface 23 is movable along a direction of forward movement G.

Specifically, the work surface 23 may be of the type of a conveyor belt, a roller conveyor, or the like.

The dispenser 1 is operable to dispense the decorative powder A on a decorative surface S of the ceramic article M in the movement along the axis of work W depending on at least one predefined pattern.

The axis of work W is transverse to the direction of forward movement G. Preferably, the axis of work W is orthogonal to the direction of forward movement G.

Conveniently, the machine 21 comprises a plurality of dispensers 1, each operable to dispense a relevant decorative powder A.

The decorative powders A can be distinguished by color, so as to give the predefined pattern different color shades, or they can be provided with additional decorative features such as, e.g., a metallic effect.

The machine 21 also comprises a movement system 24 of the dispenser 1 with respect to the basic frame 22.

The movement system 24 is of the type known to the technician in the field and may comprise, for example, a crossbar 25 arranged above the work surface 23 and extending along the axis of work W and a trolley associated movable to the crossbar and adapted to support the dispenser 1.

The movement system 24 may then comprise a motor and a system of transmission belts and wheels, kinematically connected to the trolley and adapted to transfer the motion of the motor to the trolley itself.

Advantageously, the machine 21 comprises at least one electronic control unit 26 operatively connected to the dispenser 1 and configured to operate the adjustment means 11 to adjust the amount of decorative powder A to be dispensed.

More specifically, the electronic control unit 26 is operatively connected to the adjustment means 11 of the dispensers 1 and is configured to selectively control the adjustment means themselves according to the predefined pattern.

The electronic control unit 26 is also operatively connected to the movement system 24 and is configured to operate the motor according to the predefined pattern.

It has in practice been ascertained that the described invention achieves the intended objects, and in particular the fact is emphasized that the present decorative powder dispenser for ceramic articles enables precise and repeatable dispensing of the decorative powder by means of the dosing portion.

In addition, thanks to the stirring portion, the present dispenser reduces the risk of the formation of bulky aggregates, thus allowing for accurate decoration of the ceramic article.

## Claims

1. Decorative powder dispenser (1) for the decoration of ceramic articles, wherein it comprises:
- at least one containment chamber (2) containing a decorative powder (A) for the decoration of at least one ceramic article (M), provided with at least one dispensing port (2a) through which said decorative powder (A) is dispensed on a decorative surface (S) of said ceramic article (M);
- at least one plug body (4) provided with at least one closing portion (5) of said dispensing port (2a) and movable between a home configuration, wherein said closing portion (5) obstructs said dispensing port (2a) and prevents said decorative powder (A) from being dispensed, and at least one operating configuration, wherein said closing portion (5) is moved along at least one direction of movement (D1, D2) with respect to said dispensing port (2a) and allows said decorative powder (A) to be dispensed;
- movement means (6, 13) of said plug body (4) adapted to move said plug body (4) between said home configuration and said operating configuration; wherein:
- in said home configuration, said closing portion (5) and said dispensing port (2a) define at least one free section (F);
- said dispensing port (2a) and said closing portion (5) are shaped so that said decorative powder (A) cannot flow through the said free section (F) and come out of said containment chamber (2) in said home configuration;
**characterized in that** said movement means (6, 13) comprise a vibration transmission assembly (13) adapted to move by oscillatory motion said plug body (4) along at least one transverse direction (D2), which direction is transverse to the longitudinal axis of the containment chamber (2), between said operating configuration and said home configuration.

2. Dispenser (1) according to claim 1, **characterized by** the fact that said closing portion (5) is complementary in shape with respect to said dispensing port (2a).

3. Dispenser (1) according to one or more of the preceding claims, **characterized by** the fact that said movement means (6, 13) comprise at least one movement assembly (6) adapted to move said plug body (4) sliding through said dispensing port (2a) along at least one longitudinal direction (D1), which direction is substantially parallel to a longitudinal axis of the containment chamber (2) and passes through the dispensing port (2a), between said home configuration and said operating configuration, wherein, in said operating configuration, said closing portion (5) is moved away from said dispensing port (2a).

4. Dispenser (1) according to one or more of the preceding claims, **characterized by** the fact that said movement means (6, 13) comprise:
- electromagnetic actuator means (14, 15) adapted to move said plug body (4), said plug body (4) comprising at least one magnetic element (16) adapted to operate in conjunction with said electromagnetic actuator means (14, 15); and
- power supply means (17) adapted to supply said electromagnetic actuator means (14, 15) with at least one supply voltage having a predefined frequency to actuate at least one of either said movement assembly (6) or said vibration transmission assembly (13).

5. Dispenser (1) according to claims 3 and 4, **characterized by** the fact that said movement assembly (6) comprises at least one actuator device (14) operable to move said plug body (4) along said longitudinal direction (D1) between said home configuration and said operating configuration, said sliding depending on said predefined frequency.

6. Dispenser (1) according to one or more of the preceding claims, **characterized by** the fact that said vibration transmission assembly (13) comprises:
- at least one guidance body (18) defining a housing cavity (18a) of said magnetic element (16);
- at least one actuator body (15) operable to move said plug body (4) along said transverse direction (D2) in said operating configuration, said oscillatory motion depending on said predefined frequency; and
- elastically deformable means (20) positioned between said guidance body (18) and said plug body (4) and adapted to return said plug body (4) to said home configuration.

7. Dispenser (1) according to claim 5 and 6, **characterized by** the fact that said actuator body (15) coincides with said actuator device (14).

8. Dispenser (1) according to one or more of the preceding claims, **characterized by** the fact that said plug body (4) comprises at least one dosing portion (7) adapted to adjust the dispensing of said decorative powder (A), wherein, in said operating configuration, said dosing portion (7) is arranged through said dispensing port (2a) to partly free the dispensing port itself, allowing for a gradual outflow of said decorative powder (A) from said containment chamber (2), so that precise and accurate decorations can be made.

9. Dispenser (1) according to claim 8, **characterized by** the fact that said dosing portion (7) comprises at least one recess (8) provided with an adjustment surface (7a) defining with said dispensing port (2a) at least one transit section (P) of said decorative powder (A), in said operating configuration, and by the fact that said adjustment surface (7a) can be positioned at a plurality of dispensing heights (Q) arranged along said longitudinal direction (D1), defining with said dispensing port (2a) a plurality of corresponding transit sections (P) separate from each other.

10. Dispenser (1) according to claim 9, **characterized by** the fact that it comprises adjustment means (11) operatively connected to said movement means (6, 13) and configured to adjust at least one of either said dispensing height (Q), in said operating configuration, the speed of movement of said plug body (4) between said home configuration and said operating configuration, or said predefined frequency.

11. Machine (21) for the decoration of ceramic articles, **characterized by** the fact that it comprises:
- at least one basic frame (22);
- at least one dispenser (1) according to one or more of the preceding claims, associated movable in a sliding manner with said basic frame (22) along at least one axis of work (W) and operable to dispense said decorative powder (A) onto a decorative surface (S) of said ceramic article (M) in the movement along said axis of work (W) depending on at least one predefined pattern.

12. Machine (21) according to claim 11, **characterized by** the fact that it comprises a plurality of said dispensers (1), each operable to dispense a relevant decorative powder (A).

13. Machine (21) according to claim 11 or 12, **characterized by** the fact that it comprises at least one electronic control unit (26) operatively connected to said dispenser (1) and configured to operate said adjustment means (11) to adjust the amount of said decorative powder (A) to be dispensed.

## Patentansprüche

1. Spender für Dekorationspulver (1) für die Dekoration von Keramikgegenständen, wobei er umfasst:
- mindestens eine Aufnahmekammer (2), die ein Dekorationspulver (A) für die Dekoration mindestens eines Keramikgegenstandes (M) enthält und mit mindestens einer Abgabeöffnung (2a) zur Abgabe des Dekorationspulvers (A) auf eine Dekorationsfläche (S) des Keramikgegenstandes (M);
- mindestens einen Stopfenkörper (4), der mit mindestens einem Verschlussabschnitt (5) für die Abgabeöffnung (2a) versehen ist und zwischen einer Ausgangskonfiguration, in der der Verschlussabschnitt (5) die Abgabeöffnung (2a) versperrt und die Abgabe des Dekorationspulvers (A) verhindert, und mindestens einer Betriebskonfiguration beweglich ist, in der der Verschlussabschnitt (5) entlang mindestens einer Bewegungsrichtung (D1, D2) in Bezug auf die Abgabeöffnung (2a) bewegt wird und die Abgabe des Dekorationspulvers (A) ermöglicht,
- Bewegungsmittel (6, 13) für den Stopfenkörper (4), die ausgebildet sind, den Stopfenkörper (4) zwischen der Ausgangskonfiguration und der Betriebskonfiguration zu bewegen, wobei:
- in der Ausgangskonfiguration der Verschlussabschnitt (5) und die Abgabeöffnung (2a) mindestens einen freien Abschnitt (F) definieren;
- die Abgabeöffnung (2a) und der Verschlussabschnitt (5) so geformt sind, dass das Dekorationspulver (A) in der Ausgangskonfiguration nicht durch den freien Abschnitt (F) fließen und aus der Aufnahmekammer (2) austreten kann,
**dadurch gekennzeichnet, dass** die Bewegungsmittel (6, 13) eine Schwingungsübertragungsanordnung (13) umfassen, die ausgebildet ist, den Stopfenkörper (4) durch eine oszillierende Bewegung entlang mindestens einer Querrichtung (D2), die quer zu der Längsachse der Aufnahmekammer (2) verläuft, zwischen der Betriebskonfiguration und der Ausgangskonfiguration zu bewegen.

2. Spender (1) nach Anspruch 1, **dadurch gekennzeichnet, dass** der Verschlussabschnitt (5) komplementär zur Abgabeöffnung (2a) geformt ist.

3. Spender (1) nach einem oder mehreren der vorhergehenden Ansprüche, **dadurch gekennzeichnet, dass** die Bewegungsmittel (6, 13) mindestens eine Bewegungsanordnung (6) umfassen, die ausgebildet ist, den Stopfenkörper (4) gleitend durch die Abgabeöffnung (2a) entlang mindestens einer Längsrichtung (D1), die im Wesentlichen parallel zu einer Längsachse der Aufnahmekammer (2) ist und durch die Abgabeöffnung (2a) verläuft, zwischen der Ausgangskonfiguration und der Betriebskonfiguration zu bewegen, wobei in der Betriebskonfiguration der Verschlussabschnitt (5) von der Abgabeöffnung (2a) weg bewegt ist.

4. Spender (1) nach einem oder mehreren der vorhergehenden Ansprüche, **dadurch gekennzeichnet, dass** die Bewegungsmittel (6, 13) umfassen:
- elektromagnetische Betätigungsmittel (14, 15), die ausgebildet sind, den Stopfenkörper (4) zu bewegen, wobei der Stopfenkörper (4) mindestens ein magnetisches Element (16) umfasst, das ausgebildet ist, in Verbindung mit den elektromagnetischen Betätigungsmitteln (14, 15) zu arbeiten; und
- Stromversorgungsmittel (17), die ausgebildet sind, die elektromagnetische Betätigungsmittel (14, 15) mit mindestens einer Versorgungsspannung mit einer vordefinierten Frequenz zu versorgen, um die Bewegungsanordnung (6) und/oder die Schwingungsübertragungsanordnung (13) zu betätigen.

5. Spender (1) nach den Ansprüchen 3 und 4, **dadurch gekennzeichnet, dass** die Bewegungsanordnung (6) mindestens eine Betätigungsvorrichtung (14) umfasst, die zur Bewegung des Stopfenkörpers (4) entlang der Längsrichtung (D1) zwischen der Ausgangskonfiguration und der Betriebskonfiguration betätigbar ist, wobei das Gleiten von der vordefinierten Frequenz abhängt.

6. Spender (1) nach einem oder mehreren der vorhergehenden Ansprüche, **dadurch gekennzeichnet, dass** die Schwingungsübertragungsanordnung (13) umfasst
- mindestens einen Führungskörper (18), der einen Aufnahmehohlraum (18a) des magnetischen Elements (16) definiert,
- mindestens einen Betätigungskörper (15), der zur Bewegung des Stopfenkörpers (4) entlang der Querrichtung (D2) in der Betriebskonfiguration betätigbar ist, wobei die oszillierende Bewegung von der vordefinierten Frequenz abhängt; und
- elastisch verformbare Mittel (20), die zwischen dem Führungskörper (18) und dem Stopfenkörper (4) angeordnet und ausgebildet sind, den Stopfenkörper (4) in die Ausgangskonfiguration zurückzuführen.

7. Spender (1) nach Anspruch 5 und 6, **dadurch gekennzeichnet, dass** der Betätigungskörper (15) mit der Betätigungsvorrichtung (14) zusammenfällt.

8. Spender (1) nach einem oder mehreren der vorhergehenden Ansprüche, **dadurch gekennzeichnet, dass** der Stopfenkörper (4) mindestens einen Dosierabschnitt (7) umfasst, der ausgebildet ist, die Abgabe des Dekorationspulvers (A) einzustellen, wobei in der Betriebskonfiguration der Dosierabschnitt (7) durch die Abgabeöffnung (2a) hindurch angeordnet ist, um die Abgabeöffnung selbst teilweise freizugeben, was ein allmähliches Ausfließen des Dekorationspulvers (A) aus der Aufnahmekammer (2) ermöglicht, so dass präzise und genaue Dekorationen vorgenommen werden können.

9. Spender (1) nach Anspruch 8, **dadurch gekennzeichnet, dass** der Dosierabschnitt (7) mindestens eine Aussparung (8) umfasst, die mit einer Einstellfläche (7a) versehen ist, die mit der Abgabeöffnung (2a) mindestens einen Durchgangsabschnitt (P) für das Dekorationspulver (A) in der Betriebskonfiguration definiert, und dadurch, dass die Einstellfläche (7a) in einer Vielzahl von Abgabehöhen (Q) positioniert werden kann, die entlang der Längsrichtung (D1) angeordnet sind und mit der Abgabeöffnung (2a) eine Vielzahl von entsprechenden, voneinander getrennten Durchgangsabschnitten (P) definieren.

10. Spender (1) nach Anspruch 9, **dadurch gekennzeichnet, dass** er Einstellmittel (11) umfasst, die mit den Bewegungsmitteln (6, 13) betriebsmäßig verbunden und ausgebildet sind, die Abgabehöhe (Q) in der Betriebskonfiguration und/oder die Geschwindigkeit der Bewegung des Stopfenkörpers (4) zwischen der Ausgangskonfiguration und der Betriebskonfiguration und/oder die vordefinierte Frequenz einzustellen.

11. Maschine (21) zur Dekoration von keramischen Gegenständen, **dadurch gekennzeichnet, dass** sie umfasst:
- mindestens einen Grundrahmen (22);
- mindestens einen Spender (1) nach einem oder mehreren der vorhergehenden Ansprüche, der dem Grundrahmen (22) auf gleitende Weise entlang mindestens einer Arbeitsachse (W) beweglich zugeordnet und betätigbar ist, um bei der Bewegung entlang der Arbeitsachse (W) das Dekorationspulver (A) auf eine dekorative Oberfläche (S) des keramischen Gegenstands (M) in Abhängigkeit von mindestens einem vordefinierten Muster abzugeben.

12. Maschine (21) nach Anspruch 11, **dadurch gekennzeichnet, dass** sie eine Vielzahl von Spendern (1) umfasst, von denen jeder zur Abgabe eines entsprechenden Dekorationspulvers (A) betätigbar ist.

13. Maschine (21) nach Anspruch 11 oder 12, **dadurch gekennzeichnet, dass** sie mindestens eine elektronische Steuereinheit (26) umfasst, die mit dem Spender (1) betriebsmäßig verbunden und ausgebildet ist, die Einstellmittel (11) zu betätigen, um die Menge des abzugebenden Dekorationspulvers (A) einzustellen.

## Revendications

1. - Distributeur de poudre décorative (1) pour la décoration d'articles en céramique, dans lequel il comprend :
- au moins une chambre de confinement (2) contenant une poudre décorative (A) pour la décoration d'au moins un article en céramique (M), comportant au moins un orifice de distribution (2a) à travers lequel ladite poudre décorative (A) est distribuée sur une surface décorative (S) dudit article en céramique (M) ;
- au moins un corps de bouchon (4) comportant au moins une partie de fermeture (5) dudit orifice de distribution (2a) et mobile entre une configuration initiale, dans laquelle ladite partie de fermeture (5) obstrue ledit orifice de distribution (2a) et empêche ladite poudre décorative (A) d'être distribuée, et au moins une configuration de fonctionnement, dans laquelle ladite partie de fermeture (5) est déplacée le long d'au moins une direction de mouvement (D1, D2) par rapport audit orifice de distribution (2a) et permet à ladite poudre décorative (A) d'être distribuée ;
- des moyens de déplacement (6, 13) dudit corps de bouchon (4) agencés pour déplacer ledit corps de bouchon (4) entre ladite configuration initiale et ladite configuration de fonctionnement ;
dans lequel :
- dans ladite configuration initiale, ladite partie de fermeture (5) et ledit orifice de distribution (2a) définissent au moins une section libre (F) ;
- ledit orifice de distribution (2a) et ladite partie de fermeture (5) sont formés de telle sorte que ladite poudre décorative (A) ne peut pas s'écouler à travers ladite section libre (F) et sortir de ladite chambre de confinement (2) dans ladite configuration initiale ;
**caractérisé par le fait que** lesdits moyens de déplacement (6, 13) comprennent un ensemble de transmission de vibration (13) agencé pour déplacer, par mouvement oscillatoire, ledit corps de bouchon (4) le long d'au moins une direction transversale (D2), laquelle direction est transversale à l'axe longitudinal de la chambre de confinement (2), entre ladite configuration de fonctionnement et ladite configuration initiale.

2. - Distributeur (1) selon la revendication 1, **caractérisé par le fait que** ladite partie de fermeture (5) est de forme complémentaire par rapport audit orifice de distribution (2a).

3. - Distributeur (1) selon une ou plusieurs des revendications précédentes, **caractérisé par le fait que** lesdits moyens de déplacement (6, 13) comprennent au moins un ensemble de déplacement (6) agencé pour déplacer ledit corps de bouchon (4) coulissant à travers ledit orifice de distribution (2a) le long d'au moins une direction longitudinale (D1), laquelle direction est sensiblement parallèle à un axe longitudinal de la chambre de confinement (2) et passe à travers l'orifice de distribution (2a), entre ladite configuration initiale et ladite configuration de fonctionnement, dans lequel, dans ladite configuration de fonctionnement, ladite partie de fermeture (5) est déplacée à l'opposé de l'orifice de distribution (2a).

4. - Distributeur (1) selon une ou plusieurs des revendications précédentes, **caractérisé par le fait que** lesdits moyens de déplacement (6, 13) comprennent :
- des moyens actionneurs électromagnétiques (14, 15) agencés pour déplacer ledit corps de bouchon (4), ledit corps de bouchon (4) comprenant au moins un élément magnétique (16) agencé pour fonctionner conjointement avec lesdits moyens actionneurs électromagnétiques (14, 15) ; et
- des moyens d'alimentation électrique (17) agencés pour alimenter lesdits moyens actionneurs électromagnétiques (14, 15) avec au moins une tension d'alimentation ayant une fréquence prédéfinie pour actionner au moins un parmi ledit ensemble de déplacement (6) et ledit ensemble de transmission de vibration (13).

5. - Distributeur (1) selon les revendications 3 et 4, **caractérisé par le fait que** ledit ensemble de déplacement (6) comprend au moins un dispositif actionneur (14) actionnable pour déplacer ledit corps de bouchon (4) le long de ladite direction longitudinale (D1) entre ladite configuration initiale et ladite configuration de fonctionnement, ledit coulissement dépendant de ladite fréquence prédéfinie.

6. - Distributeur (1) selon une ou plusieurs des revendications précédentes, **caractérisé par le fait que** ledit ensemble de transmission de vibration (13) comprend :
- au moins un corps de guidage (18) définissant une cavité de réception (18a) dudit élément magnétique (16) ;
- au moins un corps actionneur (15) actionnable pour déplacer ledit corps de bouchon (4) le long de ladite direction transversale (D2) dans ladite configuration de fonctionnement, ledit mouvement oscillatoire dépendant de ladite fréquence prédéfinie ; et
- des moyens élastiquement déformables (20) positionnés entre ledit corps de guidage (18) et ledit corps de bouchon (4) et agencés pour ramener ledit corps de bouchon (4) dans ladite configuration initiale.

7. - Distributeur (1) selon les revendications 5 et 6, **caractérisé par le fait que** ledit corps actionneur (15) coïncide avec ledit dispositif actionneur (14).

8. - Distributeur (1) selon une ou plusieurs des revendications précédentes, **caractérisé par le fait que** ledit corps de bouchon (4) comprend au moins une partie de dosage (7) agencée pour ajuster la distribution de ladite poudre décorative (A), dans lequel, dans ladite configuration de fonctionnement, ladite partie de dosage (7) est disposée à travers ledit orifice de distribution (2a) pour libérer partiellement l'orifice de distribution lui-même, permettant un écoulement progressif de ladite poudre décorative (A) hors de ladite chambre de confinement (2), de telle sorte que des décorations précises et exactes peuvent être réalisées.

9. - Distributeur (1) selon la revendication 8, **caractérisé par le fait que** ladite partie de dosage (7) comprend au moins un évidement (8) comportant une surface d'ajustement (7a) définissant, avec ledit orifice de distribution (2a), au moins une section de passage (P) de ladite poudre décorative (A), dans ladite configuration de fonctionnement, et **par le fait que** ladite surface d'ajustement (7a) peut être positionnée à une pluralité de hauteurs de distribution (Q) disposées le long de ladite direction longitudinale (D1), définissant, avec ledit orifice de distribution (2a), une pluralité de sections de passage correspondantes (P) séparées les unes des autres.

10. - Distributeur (1) selon la revendication 9, **caractérisé par le fait qu'**il comprend des moyens d'ajustement (11) reliés de manière fonctionnelle auxdits moyens de déplacement (6, 13) et configurés pour ajuster au moins une parmi ladite hauteur de distribution (Q), dans ladite configuration de fonctionnement, la vitesse de déplacement dudit corps de bouchon (4) entre ladite configuration initiale et ladite configuration de fonctionnement, et ladite fréquence prédéfinie.

11. - Machine (21) pour la décoration d'articles en céramique, **caractérisée par le fait qu'**elle comprend :
- au moins un châssis de base (22) ;
- au moins un distributeur (1) selon une ou plusieurs des revendications précédentes, associé mobile d'une manière coulissante avec ledit châssis de base (22) le long d'au moins un axe de travail (W) et actionnable pour distribuer ladite poudre décorative (A) sur une surface décorative (S) dudit article en céramique (M) lors du mouvement le long dudit axe de travail (W) selon au moins un motif prédéfini.

12. - Machine (21) selon la revendication 11, **caractérisée par le fait qu'**elle comprend une pluralité desdits distributeurs (1), chacun actionnable pour distribuer une poudre décorative (A) concernée.

13. - Machine (21) selon la revendication 11 ou 12, **caractérisée par le fait qu'**elle comprend au moins une unité de commande électronique (26) reliée de manière fonctionnelle audit distributeur (1) et configurée pour actionner lesdits moyens d'ajustement (11) de façon à ajuster la quantité de ladite poudre décorative (A) à distribuer.
